# EUROPEAN PATENT APPLICATION

(11) **EP 0 648 565 A1**
(43) Date of publication of application: **19.04.1995**
(21) Application number: 94115992.3
(22) Date of filing: 11.10.1994
(51) Int. Cl.: B23B 25/06, B23B 49/00

(54) **A device for connecting an instrument with a calibrated scale for measuring micrometric lengths to the head of a machine tool**

(30) Priority: 13.10.1993 IT TO930749
(71) Applicant: UNIONS-PLAST S.r.L., I-10093 Collegno (Torino) (IT)
(72) Inventor: Reani, Dino, I-10040 Savonera (Torino) (IT)
(74) Representative: Marchitelli, Mauro

(57) **Abstract**

A device for connecting to the head (12) of a machine tool an instrument (1) for measuring micrometric lengths on a calibrated scale of the type including a casing (2) carrying a feeler (6) and a dial (8) for reading the extent of the movement of the feeler (6) relative to the casing (2). The device includes a body (14) with a seat (72) for receiving the feeler (6) of the instrument (1), a rotatable shaft (18) able to translate axially relative to the body (14) and transmission means operable to move the feeler (6) by an amount proportional to the axial movement of the shaft (18) relative to the body (14).

## Description

The present invention relates to a device for connecting an instrument for measuring micrometric lengths on a calibrated scale to the head of a machine tool such as a milling machine or a boring machine for example.

In machining carried out by means of a cutting tool which is movable relative to the workpiece (typically during drilling, milling, boring, turning and similar operations), it is necessary to position the tool-carrying head of the machine in a reference position relative to the workpiece before beginning the machining.

This operation is normally carried out with the assistance of a machine known as a comparator which includes a casing with a feeler movable along the longitudinal axis thereof and a measuring mechanism capable of measuring the extent of the axial movements of the feeler rod with an accuracy up to a thousandth of a millimetre. The comparator is connected to the tool-carrying head and this is moved until the readings of the instrument show the head has reached a predetermined position relative to the workpiece.

The disadvantage which is most frequently encountered during the positioning of the machine tool relative to the workpiece is the difficulty of reading the instrument which, being fitted to the head of the machine, rotates therewith and is often in positions in which the dial of the instrument faces away from the operator, making it very difficult to read the measurements.

In order to overcome this disadvantage, the object of the present invention is a device for connecting an instrument to the head of a machine tool, characterised in that it includes:
- a body with a seat for receiving the feeler of the instrument,
- a rotatable shaft able to perform axial translations relative to the body, and
- transmission means able to move the feeler of the instrument by an amount proportional to the extent of the axial movement of the shaft relative to the body.

Thanks to this arrangement, it is possible to release the instrument from the rotation of the tool-carrying head of the machine and to centre the tool-carrying head relative to holes in the workpiece while keeping the dial of the instrument constantly facing the operator.

Additional characteristics and advantages of the invention will become apparent from the detailed description provided hereafter purely by way of non-limitative example, with reference to the appended drawings, in which:
Figure 1 is an axial section of a first embodiment of the device according to the present invention;
Figure 2 is an exploded perspective view of the device of Figure 1;
Figure 3 is an axial section of a second embodiment of the device of the invention; and
Figure 4 is an exploded perspective view of the device of Figure 3.

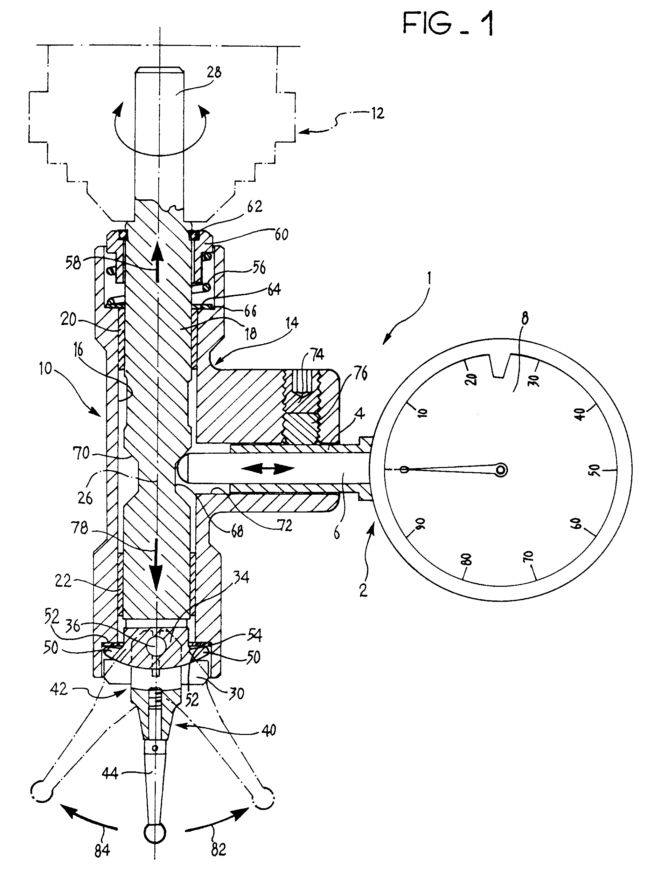

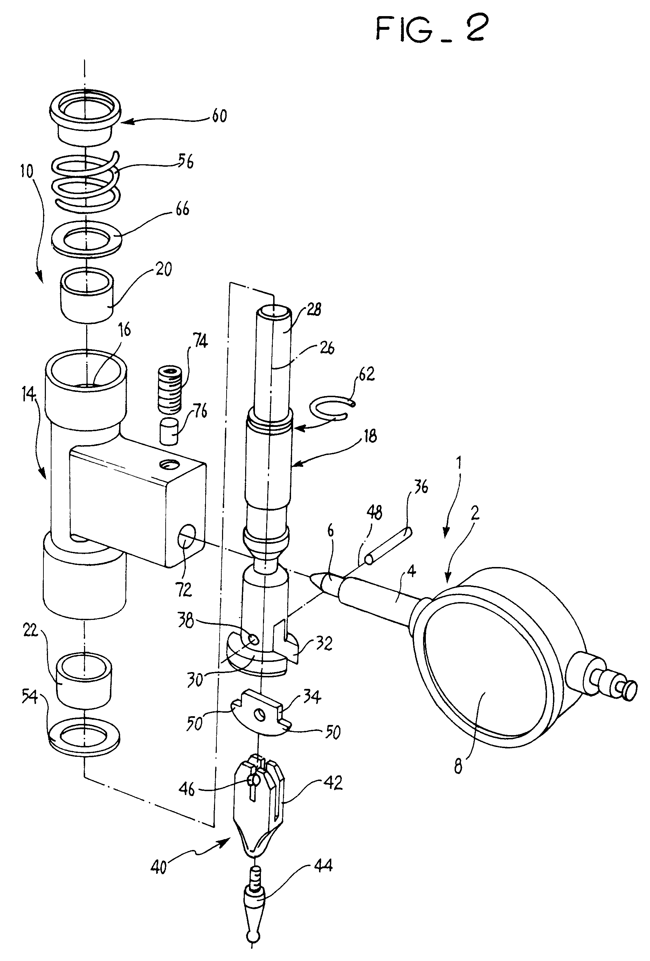

With reference to Figures 1 and 2, a comparator 1, of a type known per se, is constituted by a casing 2 with a tubular projection 4 in which a feeler 6 is slidably mounted. The comparator 1 has a reading dial 8 with a graduated scale for displaying the extent of the axial movements of the feeler 6.

The reference number 10 indicates a device for connecting the comparator 1 to the head of a machine tool, illustrated by a chain line in Figure 1 and indicated 12. The device 10 includes a body 14 with a through-hole 16 with a shaft 18 arranged therein. Bushings 20, 22 are interposed between the shaft 18 and the body 14 so as to permit the shaft 18 to translate axially and to rotate about its longitudinal axis 26 relative to the body 14.

One end of the shaft 18 extends outside the body 14 to form a tang 28 which is gripped by the head 12 in place of a cutting tool. The opposite end of the shaft 18 has a shoulder 30 and an axial slot 32 (see Figure 2 in particular) in which is housed a reaction element 34 fixed to a transverse pin 36 which is free to rotate in a transverse hole 38 in the shaft 18. A feeler member 40 is fixed to the pin 36, constituted by a base portion 42 and a removable tip 44, fixed by means of a threaded coupling to the base portion 42 and replaceable by tips of different lengths. The base portion 42 of the feeler member 40 is bifurcated, with the reaction element 34 housed in the space between the two prongs. A pair of recesses 46 are formed in the base portion 42 for friction fitting the feeler member 40 on the transverse pin 36. The base portion 42 is fitted to the pin 36 in such a way that the feeler member 40 is securely fixed to the pin 36 as long as the torque urging the feeler member 40 to turn about the axis 48 of the pin 36 is below a predetermined value, while once the torque is greater than this value the feeler member 40 may turn about the pin 36, varying its angular orientation relative to the axis 26 of the shaft 18.

The reactor element 34 has a pair of arms 50 cooperable with a shoulder 52 of the body 14. A washer 54 of antifriction material is interposed between the arms 50 and the shoulder 52.

A compressed coil spring 56, coaxial with the shaft 18, is interposed between the shaft 18 and the body 14 and tends to urge the shaft 18 in the sense indicated by the arrow 58 in Figure 1. A shoulder 60 is mounted on the shaft 18 and held axially by a stop ring 62 which serves as support for one end of the spring 56. The second end of the spring 56 rests on a shoulder 64 of the body 14, with an interposed washer 66.

The shaft 18 has a circumferential groove 68 with a cam surface 70 inclined by 45° to the longitudinal axis 26 of the shaft 18. The cam surface 70 is arranged to coincide with a seat 72 constituted by a transverse hole formed in the body 14. The dimensions of the hole 72 are such that it can receive the tubular projection 4 of the comparator 1 with a slight clearance. The projection 4 of the comparator 1 is fixed in the seat 72 by tightening a grub screw 74 which compresses an element 76 of plastics material. The feeler rod 6 of the instrument 1 is pressed against the cam surface 70 of the shaft 18 by resilient means forming part of the measuring mechanism of the instrument 1. The extent of axial movement of the feeler 6 is proportional to the axial movement of the shaft 18 relative to the body 14. Rotation of the shaft 18 relative to the body 14, on the other hand, has no effect on the feeler 6.

The arrangement described above enables the shaft 18 to move relative to the body 14 in the direction indicated by the arrow 78 of Figure 1 by an amount proportional to the extent of the angular movement of the feeler member 40 about the axis 48 of the pin 36. In fact, the pivoting movements of the feeler member 40 in the directions indicated by the arrows 82, 84 moves one of the arms 50 of the reaction element 34 into contact with the shoulder 52 of the body 14, thereby causing an axial force to act on the shaft 18 in the direction shown by the arrow 78.

When the shaft 18 reaches a travel limit position in which the shoulder 60 bears against the shoulder 64 of the body 14, a further torque on the feeler member 40 causes the friction coupling of the feeler member 40 and the pin 36 to slip, thereby enabling the feeler member 40 to assume a different angular orientation relative to the axis 26 of the shaft 18.

The broken line in Figure 1 shows the two travel-limit positions of the feeler member 40.

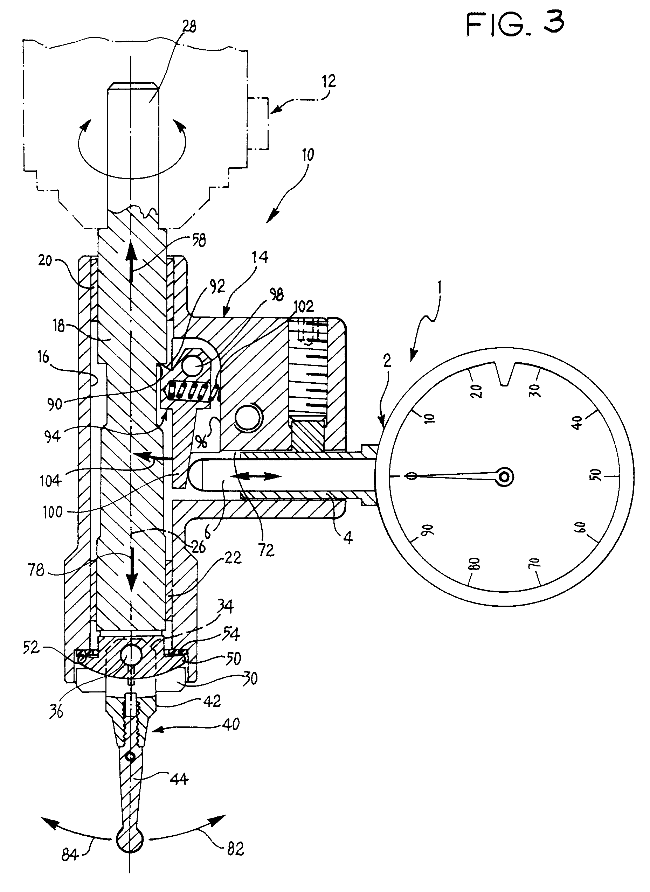

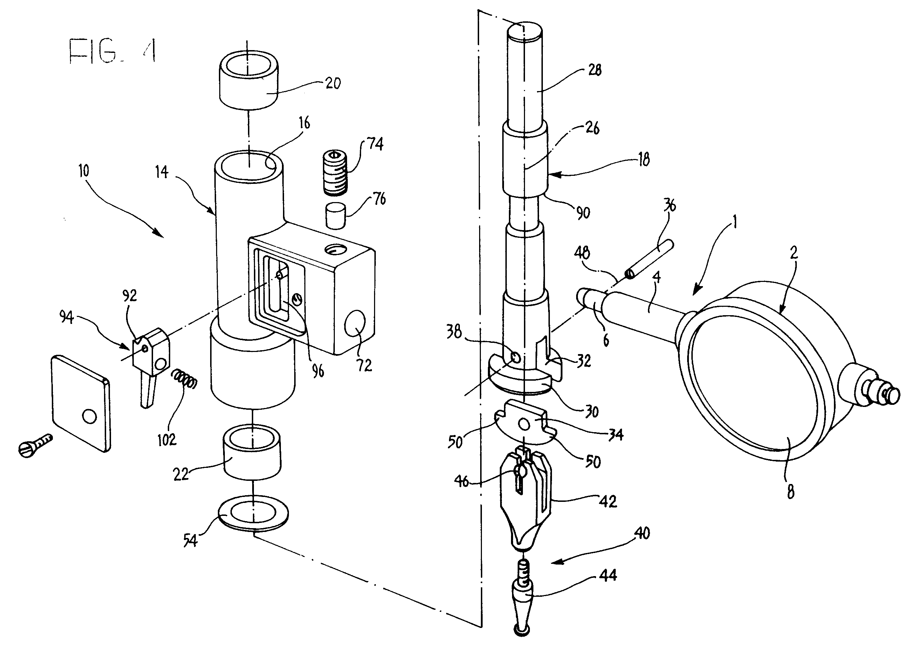

Figures 3 and 4 illustrate a second embodiment of the device of the invention.

Points which are identical to those described above are indicated by the same reference numbers.

In the variant of Figures 3 and 4, instead of having a cam surface with the feeler member 6 bearing against it, the shaft 18 has a shoulder 90 which cooperates with a first lever arm 92 of a rocker element 94 housed in a cavity 96 of the body 14 and pivoted thereon about an axis 98.

The rocker element 94 has a second lever arm 100 which extends into the hole 72 and cooperates with the end of the feeler 6. A compressed coil spring 102 is interposed between the rocker element 94 and the body 14 and urges the rocker element in the direction indicated by the arrow 104 of Figure 3. The force of the spring 102 holds the first lever arm 92 in contact with the shoulder 90 and constantly urges the shaft 18 in the direction indicated by the arrow 58 of Figure 3.

The operation of this device is similar to that described previously. In this case, too, the angular movements of the feeler member 40 in the directions indicated by the arrows 82, 84 cause the shaft 18 to translate along the direction indicated by the arrow 78 of Figure 3. The translation of the shaft 18 causes the rocker element 94 to turn about its pivot 98, with this angular movement in turn causing the feeler 6 of the instrument 1 to slide axially.

In this case, careful choice of the dimensions of the arms 50 of the reaction element 34 and of the length of the feeler member 40 and the lever arms 92, 100 of the rocker element 94 makes it possible to obtain an axial movement of the feeler 6 of the same extent as that of the movement of the end of the feeler member 40.

## Claims

1. A device for connecting to the head (12) of a machine tool an instrument (1) for measuring micrometric distances on a calibrated scale, of the type including a casing (2) carrying a feeler (6) and a dial (8) for displaying the extent of the movement of the feeler (6) relative to the casing (2), the device being characterised in that it includes:
- a body (14) with a seat (72) for receiving the feeler (6) of the instrument (1),
- a rotatable shaft (18) able to move axially relative to the body (14), and
- transmission means (70; 94) operable to move the feeler (6) of the instrument (1) by an amount proportional to the extent of the axial movement of the shaft (18) relative to the body (14).

2. A device according to Claim 1, characterised in that the said transmission means include a cam surface (70), inclined to the axis (26) of the shaft (18) and against which an end of the feeler (6) of the instrument (1) is intended to bear.

3. A device according to Claim 1, characterised in that the said transmission means include a rocker element (94) pivoted on the body (14) and having a first lever arm (92) bearing against a shoulder (90) of the shaft (18) and a second lever arm (100) against which an end of the feeler (6) of the instrument (1) is intended to bear.

4. A device according to any one of the preceding Claims, characterised in that it includes a feeler mechanism which includes a feeler member (40) rockable about an axis (48) orthogonal to the translational axis (26) of the shaft (18), the said feeler mechanism being operable to cause an axial movement of the shaft (18) by an amount proportional to that of the angular movement of the feeler member (40).

5. A device according to Claim 4, characterised in that it includes resilient means (56; 102) which act on the shaft (18) with an axial force directed so as to bias the axial movement caused by the angular movement of the said feeler member (40).

6. A device according to Claim 5, characterised in that the said resilient means includes a coil spring (56) coaxial with the shaft (18) and interposed between a shoulder (60) of the shaft (18) and a shoulder (64) of the body (14).

7. A device according to Claim 5, characterised in that the said resilient means include a loaded spring (102) interposed between the rocker element (94) and the body (14) and urging the rocker element (94) to turn so as to act on the shaft (18) with the said axial force by means of the first lever arm (92).

8. A device according to Claim 4, characterised in that the feeler mechanism (40) includes a transverse pin (36), rotatable relative to the shaft (18) and securely fixed to a reaction element (34) with two arms (50) operable to bear against a shoulder (52) of the body (14).

9. A device according to Claim 8, characterised in that the feeler member (40) is fixed to the pin (36) by a friction coupling which enables the inclination of the feeler member (40) with respect to the axis (26) of the shaft (18) to vary.
